# EUROPÄISCHE PATENTSCHRIFT

(11) **EP 2 630 545 B1**
(45) Veröffentlichungstag und Bekanntmachung des Hinweises auf die Patenterteilung: **18.07.2018**
(21) Anmeldenummer: 11802874.5
(22) Anmeldetag: 06.12.2011
(51) Int. Cl.: G05B 15/02, B21B 37/46

(54) **VERFAHREN ZUR REDUZIERUNG DES ENERGIEVERBRAUCHS EINER WALZWERKANLAGE, STEUER- UND/ODER REGELUNGSEINRICHTUNG FÜR EINE WALZWERKANLAGE, MASCHINENLESBARER PROGRAMMCODE, SPEICHERMEDIUM SOWIE EINE WALZWERKANLAGE**
METHOD FOR REDUCING THE ENERGY CONSUMPTION OF A ROLLING-MILL INSTALLATION, CONTROL AND/OR REGULATION DEVICE FOR A ROLLING-MILL INSTALLATION, MACHINE-READABLE PROGRAM CODE, STORAGE MEDIUM AND A ROLLING-MILL INSTALLATION
PROCÉDÉ DE RÉDUCTION DE LA CONSOMMATION EN ÉNERGIE D'UNE INSTALLATION DE LAMINAGE, DISPOSITIF DE COMMANDE ET/OU DE RÉGULATION POUR UNE INSTALLATION DE LAMINAGE, CODE DE PROGRAMME LISIBLE PAR MACHINE, SUPPORT DE MÉMOIRE ET INSTALLATION DE LAMINAGE

(30) Priorität: 14.12.2010 EP 10194906
(43) Veröffentlichungstag der Anmeldung: 28.08.2013
(73) Patentinhaber: Primetals Technologies Germany GmbH, 91052 Erlangen (DE)
(72) Erfinder: SEHL, Jürgen, 41239 Mönchengladbach (DE)
(74) Vertreter: Metals@Linz
(86) Internationale Anmeldenummer: PCT/EP2011/071913
(87) Internationale Veröffentlichungsnummer: WO 2012/080038

(56) Entgegenhaltungen:
- GB-A- 2 175 417
- US-B1- 7 343 353

## Beschreibung

Die Erfindung betrifft ein Verfahren zur Reduzierung des Energieverbrauchs einer Walzwerkanlage. Die Erfindung betrifft weiterhin eine Steuer- und/oder Regeleinrichtung für eine Walzwerkanlage, einen maschinenlesbaren Programmcode für eine solche Steuer- und/oder Regeleinrichtung, ein Speichermedium mit einem darauf gespeicherten maschinenlesbaren Programmcode sowie eine Walzwerkanlage umfassend eine solche Steuer- und/oder Regeleinrichtung.

Aus dem Stand der Technik, beispielsweise aus der GB 2 175 417A, ist es bekannt, im Betrieb eines Walzwerks in den planmäßigen Pausen, z.B. beim Laden eines neuen Walzstückes, den Energieverbrauch des Walzwerks zu reduzieren.

Sowohl bei Warmwalzwerken als auch bei Kaltwalzwerken kommt es während des Betriebs zu unterschiedlich langen Walzpausen. Diese Walzpausen können ungeplant sein, z.B. durch Walzenwechsel, fehlendes Vormaterial, Bandrisse oder elektrische oder mechanische Störungen entstehen. Innerhalb der ungeplanten Walzpausen erfolgt in der Regel keine Abschaltung der weiteren Anlagenkomponenten der Walzgerüste. Die weiteren Anlagenkomponenten nehmen somit auch in den unproduktiven Walzpausen hohe Energiemengen auf, die zu entsprechenden Kosten führen. Die weiteren Anlagenkomponenten werden üblicherweise von den Walzführern nach eigenem Ermessen nur bei langen Walzpausen manuell abgeschaltet. Wegen der Komplexität der Abschaltung erfolgen die Eingriffe in der Regel nur bei einzelnen, leicht handhabbaren Anlagenteilen.

Unter Anlagenkomponenten werden hierbei z.B. Nebenanlagen oder Nebenaggregate wie beispielsweise Dunstabsaugungen, Hydrauliken, Heizungen, Lüftungsanlagen, Schmiersysteme oder Antriebssysteme, Automatisierungsgeräte, Sensoren oder Messgeräte verstanden, die in der Walzwerkanlage eingesetzt sind. Die Anlagenkomponenten sind elektrisch angetrieben und gewährleisten bzw. unterstützen den Betrieb der Walzanlage bzw. der einzelnen Walzgerüste, d.h. die weiteren Anlagenkomponenten können z.B. Hilfsbetriebe der Bauelemente der Walzstraße sein.

Der Erfindung liegt die Aufgabe zugrunde, das Energiesparpotenzial einer Walzwerkanlage während einer Walzpause maximal auszuschöpfen.

Die Aufgabe wird erfindungsgemäß gelöst durch ein Verfahren zur Reduzierung des Energieverbrauchs einer Walzwerkanlage umfassend eine ein- oder mehrteilige Walzstraße sowie weitere elektrische Anlagenkomponenten, die prozesstechnisch mit der Walzstraße verbunden sind, wobei während einer unplanmäßigen Walzpause aufgrund eines Störfalls der Betrieb der Walzstraße gestoppt wird und während der unplanmäßigen Walzpause mindestens eine der weiteren Anlagenkomponenten automatisch in einen Energiesparmodus heruntergefahren wird und wobei die Art der Störung identifiziert und einer Steuer- und/oder Regeleinrichtung zugeführt wird , wobei von der Steuer- und/oder Regeleinrichtung in Abhängigkeit der Art der Störung die voraussichtliche Dauer der Walzpause bestimmt wird, wobei von der Steuer- und/oder Regeleinrichtung die Anlagenkomponenten, die in den Energiesparmodus zu versetzen sind, unter Berücksichtigung der Dauer der Walzpause und der Dauer der zum Herunter- und Hochfahren der Anlagenkomponenten erforderlichen Zeit bestimmt werden und automatisch in den Energiesparmodus heruntergefahren werden.

Die Erfindung basiert auf der Idee, den Betriebzustand der weiteren Anlagenkomponenten an den Betriebszustand der Walzstraße anzupassen. In einem Störfall, der zu einer unplanmäßigen Walzpause führt, werden somit möglichst viele der weiteren Anlagenkomponenten automatisch zeitgleich mit dem Abschalten der Walzstraße oder unmittelbar danach in den Energiesparmodus heruntergefahren.

Unmittelbar nach Auftreten der Störung wird die Art der Störung identifiziert und in Abhängigkeit der Art der Störung die voraussichtliche Dauer der Walzpause bestimmt. Beispielsweise wird der Grund für die Störung bzw. die Art der Störung von einem Walzführer erkannt und einer Steuer- und/oder Regeleinrichtung der Walzwerkanlage zugeführt. Sobald die Art der Störung feststeht, kann die Steuer- und/oder Regeleinrichtung z.B. auf Grundlage von bereits erfassten empirischen Daten die voraussichtliche Dauer der Walzpause für die konkrete Störung bestimmen.

Das Herunterfahren der Anlagenkomponenten während der Walzpause wird hierbei von der subjektiven Einschätzung des Walzführers abgekoppelt und die Vorgehensweise in Störfällen wird vereinheitlicht, da sie durch einen hohen Automatisierungsgrad gekennzeichnet ist. Dank der Automatisierung werden mögliche Fehler durch manuelle Abschaltungen, die zu Beschädigungen von Anlagenteilen bzw. zusätzlichen Stillstandszeiten führen können, vermieden, und es wird die unter den gegebenen Umständen technologisch maximale Abschalttiefe der Walzwerkanlage erreicht.

Das vorgeschlagene Verfahren zur Reduzierung des Energieverbrauchs zeichnet sich zudem durch eine Erhöhung der Lebensdauer der Anlagenkomponenten, durch reduzierte Betriebszeiten und eine Reduktion der CO₂-Mengen im Energiesparmodus aus. Hierdurch ergibt sich eine Reduktion der Stückkosten. Diese Art von Energieeinsparung kann durch eine Anpassung der Steuerungs-Software in bestehenden Automatisierungssystemen ohne großen Aufwand auch bei bestehenden Walzwerkanlagen eingesetzt werden.

Das Herunterfahren der Anlagenkomponenten in den Energiesparmodus kann auf vielerlei Weisen erfolgen. Nach einer bevorzugten Variante werden die Anlagenkomponenten in den Energiesparmodus heruntergefahren, indem sie abgeschaltet werden, so dass sie keinen Strom verbrauchen. Nach einer weiteren, alternativen Variante wird der Strom der Anlagenkomponenten im Energiesparmodus lediglich reduziert, d.h. die Anlagenkomponenten befinden sich in einem Standby-Betrieb. Unter Standby-Betrieb wird hierbei ein Wartezustand der Anlagenkomponenten verstanden, in dem ihre Nutzfunktion vorübergehend deaktiviert ist, aber jederzeit und ohne Vorbereitungen oder längere Wartezeiten wieder aktivierbar sind. Im Vergleich zur vollen Nutzung wird im Standby-Betrieb nur minimale Energie verbraucht. Wenn die Anlagenkomponenten solche sind, durch welche ein Massenfluss befördert wird werden diese Anlagenkomponenten zweckdienlicherweise in den Standby-Betrieb versetzt, indem die Fördermengen durch sie reduziert werden.

Beispiele für das Herunterfahren von Anlagenkomponenten in den Energiesparmodus sind:
- Abschaltung der Motor- und Stromrichterkühlungen in Abhängigkeit der Wicklungs- bzw. Gerätetemperatur,
- Reduzierung der Fördermengen und -drücke von Hydraulik- und Pneumatikanlagen,
- Reduzierung der Fördermengen von Dunstabsaugungen,
- Reduzierung des Durchflusses von Wasserkühlungen / Heizungen / Umwälzpumpen für Hydrauliken und Walzöle,
- Abschaltung der Magnetisierung der Hauptantriebe,
- Abschaltung der Abspritzungen / Abblasungen und
- Abschaltung von Transporteinrichtungen oder Rollgängen.

Wenn beispielsweise die durch die Störung verursachte Walzpause mehrere Minuten bis hin zu Stunden dauert, werden die meisten und insbesondere alle weiteren Anlagenkomponenten in den Energiesparmodus heruntergefahren, da in diesem Fall die Zeit zum Herunter- und Hochfahren der Anlagenkomponenten kürzer ist als die Walzpause. Wenn die voraussichtliche Dauer der Walzpause jedoch nur wenige Minuten beträgt, werden nur die Anlagenkomponenten in den Energiesparmodus versetzt, deren Herunter- und Hochfahren relativ schnell und unkompliziert erfolgt.

Zweckdienlicherweise werden mehrere Anlagenkomponenten und insbesondere alle Anlagenkomponenten, die in einen anderen energetischen Zustand versetzt werden, durch einen einzigen Steuerbefehl herunter- bzw. hochgefahren. Nach der Eingabe der Art der Störung vom Walzführer bestimmt die Steuer- und/oder Regeleinrichtung automatisch die Dauer der Walzpause bzw. welche Anlagenkomponenten heruntergefahren werden sollen und versetzt diese auch gleich automatisch in den Energiesparmodus. Der Steuerbefehl zum Herunterfahren der ausgewählten Anlagenkomponenten wird somit durch die Eingabe der Art der Störung ausgelöst.

Nach einer bevorzugten Ausgestaltung ist außerdem vorgesehen, dass nach Beenden der Walzpause die Anlagenkomponenten, die sich in den Energiesparmodus befinden, automatisch mit der Walzstraße hochgefahren werden. Die Anlagenkomponenten werden dabei in Abhängigkeit von den technologischen Anforderungen des Walzprozesses bzw. der Walzstraße insbesondere gleichzeitig oder unmittelbar vor oder nach der Wiederaufnahme des Betriebs der Walzgerüste hochgefahren.

Die Aufgabe wird weiterhin erfindungsgemäß gelöst durch eine Steuer- und/oder Regeleinrichtung für eine Walzwerkanlage, umfassend einen maschinenlesbaren Programmcode, der Steuerbefehle aufweist, welche die Steuer- und/oder Regeleinrichtung bei deren Ausführung zur Durchführung des Verfahrens veranlassen.

Ferner wird die Aufgabe gelöst durch einen maschinenlesbaren Programmcode für eine solche Steuer- und/oder Regeleinrichtung für eine Walzanlage, wobei der Programmcode Steuerbefehle aufweist, die die Steuer- und/oder Regeleinrichtung zur Durchführung des Verfahrens veranlassen. Darüber hinaus wird die Aufgabe gelöst durch ein Speichermedium mit einem darauf gespeicherten solchen maschinenlesbaren Programmcode.

Schließlich wird die Aufgabe gelöst durch eine Walzwerkanlage umfassend eine solche Steuer- und/oder Regeleinrichtung.

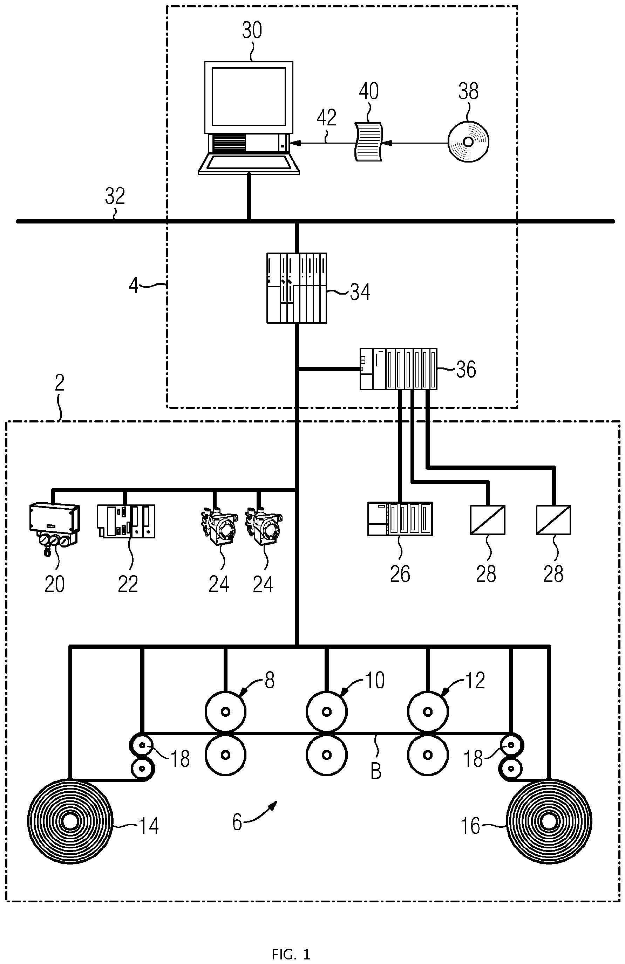

Ein Ausführungsbeispiel der Erfindung wird anhand einer Zeichnung näher erläutert. Hierin zeigt die einzige Figur schematisch eine Walzwerkanlage 2 zum Kaltwalzen eines Metallbands B. Der Walzanlage 2 ist eine Steuer- und/oder Regeleinrichtung 4 zugeordnet, die aus Gründen der Einfachheit weiterhin nur als Regeleinrichtung 4 bezeichnet wird. Die Walzwerkanlage 2 umfasst außerdem eine Walzstraße 6 mit einer Anzahl von Walzgerüsten, im gezeigten Ausführungsbeispiel mit drei Walzgerüsten 8, 10, 12. Am Anfang und am Ende der Walzstraße 6 ist im gezeigten Ausführungsbeispiel je ein Haspel - ein Abhaspel 14 und ein Aufhaspel 16 - für das Metallband B vorgesehen. In einem Einlaufbereich sowie in einem Auslaufbereich der Walzstraße 6 ist jeweils eine S-Rolle 18 angeordnet. Die S-Rollen 18 führen das Metallband B und halten dessen innere Zugspannungen aufrecht.

Die Walzwerkanlage 2 umfasst darüber hinaus weitere elektrische Anlagenkomponenten wie z.B. Kühleinrichtungen, Hydraulik- und Pneumatikanlagen, Dunstabsaugungen, Heizungen, Pumpen, sowie verschiedene Sensoren und Aktoren. In der Figur sind lediglich einige der Sensoren und der Aktoren 20, 22, 24, 26, 28 gezeigt.

Die Walzwerkanlage 2 wird über die Regeleinrichtung 4 angesteuert. Die Regeleinrichtung 4 umfasst einen Bedienrechner 30, der über einen Industrial-Ethernet-Bus 32 mit einem Automatisierungsgerät 34 datentechnisch verbunden ist. Über den Bedienrechner 30 sind Teile der Walzwerkanlage 2 bedienbar. Die verschiedenen Aktoren oder Sensoren 20, 22, 24, 26, 28 sind datentechnisch mit dem Automatisierungsgerät 34 verbunden. Ferner ist eine dezentrale Peripherie 36 mit dem Automatisierungsgerät 34 verbunden. Über die dezentrale Peripherie 36 sind einige der Aktoren oder Sensoren 26, 28 über das Automatisierungsgerät 34 ansteuerbar bzw. auswertbar.

Der Regeleinrichtung 4 ist weiterhin ein auf einem Speicher-medium 38 wie z.B. einer Festplatte oder einer CD gespeicherter maschinenlesbarer Programmcode 40 mit Steuerbefehlen 42 zugeordnet.

Über die Regeleinrichtung 4 werden den Walzgerüsten 8, 10, 12, den Haspeln 14, 16, den S-Rollen 18 sowie den weiteren Anlagenkomponenten 20 bis 28 Befehle zum Ein- und Ausschalten bzw. Hoch- und Herunterfahren ausgegeben.

Wenn z.B. die Walzstraße 6 aufgrund einer Störung ausfällt, werden die weiteren Anlagenkomponenten 20 bis 28 ebenfalls in einen Energiesparmodus versetzt. Einige dieser Anlagenkomponenten werden abgeschaltet, so dass sie keinen Strom verbrauchen. Andere Anlagenkomponenten werden in einen Standby-Betrieb versetzt, in welchem ihr Stromverbrauch reduziert ist im Vergleich zum normalen Betrieb. Bei Dunstabsaugungen, Kühleinrichtungen, Heizungen, Lüftungen und Pumpen werden z.B. die Fördermengen durch diese Anlagenkomponenten reduziert, um weniger Energie zu verbrauchen.

Das Herunterfahren der Anlagenkomponenten 20 bis 28 während einer unplanmäßigen Walzpause erfolgt auf folgende Weise:
Sobald die Störung aufgetreten ist, so dass der Walzvorgang nicht unter Normalbedingungen fortgesetzt werden kann, wird die gesamte Walzstraße 6 gestoppt. Anschließend wird die Art der Störung bzw. der Grund für die Störung insbesondere durch einen Walzführer identifiziert. Über den Bedienrechner 30 gibt der Walzführer die Art der Störung an die Regeleinrichtung 2 ein. Mittels einer Datenbank, die z.B. nach Art einer Störmatrix aufgebaut ist, bestimmt die Regeleinrichtung 2 anhand der Art der Störung eine voraussichtliche Dauer der Walzpause. Die Anlagenkomponenten 20 bis 28, deren Zeit zum Herunter- und Hochfahren kürzer ist als die Walzpause, werden dann in den Energiesparmodus automatisch heruntergefahren. Durch einen einzigen Steuerbefehl 42, der durch die Eingabe der Art der Störung ausgelöst wird, werden dann mehrere Anlagenkomponenten 20 bis 28 gleichzeitig mit den Walzgerüsten 8, 10, 12, den Haspeln 14, 16 und den S-Rollen 18 heruntergefahren.

Wenn die Störung behoben ist, werden die Anlagenkomponenten 20 bis 28, die sich im Energiesparmodus befinden, in Abhängigkeit von den technologischen Anforderungen des Walzprozesses bzw. der Walzstraße 6 automatisch mit der Walzstraße erneut in Betrieb genommen. Durch die Automatisierung der Abschaltung der Anlagenkomponenten 20 bis 28 bei unplanmäßigen Walzpausen werden somit die Einsparpotenziale der einzelnen Anlagenkomponenten 20 bis 28 gesamtheitlich erfasst und konsequent genutzt. Dank des hohen Automatisierungsgrades dieses Vorgangs wird eine optimale Wahl getroffen, welche Anlagenkomponenten 20 bis 28 heruntergefahren werden, so dass neben einer maximalen Energieeinsparung auch die Lebensdauer der Anlagenkomponenten 20 bis 28 erhöht wird.

## Patentansprüche

1. Verfahren zur Reduzierung des Energieverbrauchs einer Walzwerkanlage (2) umfassend eine ein- oder mehrteilige Walzstraße (6) sowie weitere elektrische Anlagenkomponenten (20 bis 28), die prozesstechnisch mit der Walzstraße (6) verbunden sind, wobei während einer unplanmäßigen Walzpause aufgrund eines Störfalls der Betrieb der Walzstraße (6) gestoppt wird und während der unplanmäßigen Walzpause mindestens eine der weiteren Anlagenkomponenten (20 bis 28) automatisch in einen Energiesparmodus heruntergefahren wird **dadurch gekennzeichnet dass**: die Art der Störung identifiziert und einer Steuer- und/oder Regeleinrichtung (4) zugeführt wird, wobei von der Steuer- und/oder Regeleinrichtung (4) in Abhängigkeit der Art der Störung die voraussichtliche Dauer der Walzpause bestimmt wird, wobei von der Steuer- und/oder Regeleinrichtung (4) die Anlagenkomponenten (20 bis 28), die in den Energiesparmodus zu versetzen sind, unter Berücksichtigung der Dauer der Walzpause und der Dauer der zum Herunter- und Hochfahren der Anlagenkomponenten (20 bis 28) erforderlichen Zeit bestimmt werden und automatisch in den Energiesparmodus heruntergefahren werden.

2. Verfahren nach Anspruch 1,
wobei die Anlagenkomponenten (20 bis 28) in den Energiesparmodus heruntergefahren werden, indem sie abgeschaltet werden.

3. Verfahren nach Anspruch 1,
wobei die Anlagenkomponenten (20 bis 28) in den Energiesparmodus heruntergefahren werden, indem ihr Stromverbrauch reduziert wird.

4. Verfahren nach Anspruch 3,
wobei die Anlagenkomponenten (20 bis 28) solche sind, durch welche ein Massenfluss befördert wird und diese Anlagenkomponenten (20 bis 28) in den Energiesparmodus heruntergefahren werden, indem die Fördermengen durch sie reduziert werden.

5. Verfahren nach einem der vorhergehenden Ansprüche,
wobei mehrere Anlagenkomponenten (20 bis 28) durch einen einzigen Steuerbefehl automatisch herunter- bzw. hochgefahren werden.

6. Verfahren nach einem der vorhergehenden Ansprüche, wobei nach Beenden der Walzpause die Anlagenkomponenten (20 bis 28) die sich im Energiesparmodus befinden, automatisch hochgefahren werden.

7. Steuer und/oder Regeleinrichtung (4) für eine Walzwerkanlage (2), umfassend einen maschinenlesbaren Programmcode (40), der Steuerbefehle (42) aufweist, welche bei deren Ausführung die Steuer- und/oder Regeleinrichtung (4) zur Durchführung des Verfahrens nach einem der Ansprüche 1 bis 6 veranlassen.

8. Maschinenlesbarer Programmcode (40) für eine Steuer- und/oder Regeleinrichtung (4) für eine Walzwerkanlage (2), wobei der Programmcode (40) Steuerbefehle (42) aufweist, welche die Steuer- und/oder Regeleinrichtung (4) zur Durchführung des Verfahrens nach einem der Ansprüche 1 bis 6 veranlassen.

9. Speichermedium (38) mit einem darauf gespeicherten maschinenlesbaren Programmcode (40) gemäß Anspruch 8.

10. Walzwerkanlage (2) umfassend eine Steuer- und/oder Regeleinrichtung (4) nach Anspruch 7.

## Claims

1. Method for reducing the energy consumption of a rolling mill installation (2) comprising a one-piece or multi-piece rolling train (6) as well as further electrical installation components (20 to 28) which are connected to the rolling train (6) in terms of process technology, wherein the operation of the rolling train (6) is stopped during an unplanned rolling pause on account of a failure and at least one of the further installation components (20 to 28) is automatically powered down into an energy-saving mode during the unplanned rolling pause, **characterised in that** the type of fault is identified and fed to a control and/or regulation device (4), wherein the probable duration of the rolling pause is determined by the control and/or regulation device (4) as a function of the type of fault, wherein the installation components (20 to 28) to be switched to energy-saving mode are determined by the control and/or regulation device (4)taking into account the duration of the rolling pause and the duration of the time required to power the installation components (20 to 28) down and up and are automatically powered down into energy-saving mode.

2. Method according to claim 1,
wherein the installation components (20 to 28) are powered down into energy-saving mode by shutting them off.

3. Method according to claim 1, wherein the installation components (20 to 28) are powered down into energy-saving mode by reducing their power consumption.

4. Method according to claim 3,
wherein the installation components (20 to 28) are the type through which a mass flow is conveyed and such installation components (20 to 28) are powered down into energy-saving mode by reducing the quantities conveyed through them.

5. Method according to one of the preceding claims,
wherein a number of installation components (20 to 28) are powered down and up automatically by a single control command.

6. Method according to one of the preceding claims,
wherein the installation components (20 to 28) that are in energy-saving mode are powered up automatically at the end of the rolling pause.

7. Control and/or regulation device (4) for a rolling mill installation (2), comprising a machine-readable program code (40), which has control commands (42) which prompt the control and/or regulation device (4) to perform the method according to one of claims 1 to 6 during their execution.

8. Machine-readable program code (40) for a control and/or regulation device (4) for a rolling mill installation (2), the program code (40) having control commands (42) which prompt the control and/or regulation device (4) to perform the method according to one of claims 1 to 6.

9. Storage medium (38) with a machine-readable program code (40) according to claim 8 stored thereon.

10. Rolling mill installation (2), comprising a control and/or regulation device (4) according to claim 7.

## Revendications

1. Procédé de réduction de la consommation d'énergie d'une installation de laminage (2) comprenant un train de laminage (6) en une ou plusieurs parties ainsi que d'autres composants électriques de l'installation (20 à 28) qui sont techniquement reliés au train de laminage (6) dans le processus, la marche du train de laminage (6) étant arrêtée pendant une interruption imprévue du laminage par suite d'une perturbation et au moins un des autres composants de l'installation (20 à 28) passant automatiquement dans un mode d'économie d'énergie pendant l'interruption imprévue du laminage, **caractérisé en ce que** la nature de la perturbation est identifiée et envoyée à un dispositif de commande et/ou de régulation (4), dans lequel le dispositif de commande et/ou de régulation (4) détermine la durée prévisionnelle de l'interruption du laminage en fonction de la nature de la perturbation, dans lequel le dispositif de commande et/ou de régulation (4) détermine les composants de l'installation (20 à 28) devant passer en mode d'économie d'énergie, en tenant compte de la durée de l'interruption du laminage et de la durée du temps nécessaire pour réduire et augmenter la puissance des composants de l'installation (20 à 28), et qu'il les fait passer automatiquement en mode d'économie d'énergie.

2. Procédé selon la revendication 1,
les composants de l'installation (20 à 28) passant en mode d'économie d'énergie en les désactivant.

3. Procédé selon la revendication 1,
les composants de l'installation (20 à 28) passant en mode d'économie d'énergie en réduisant leur consommation de courant.

4. Procédé selon la revendication 3,
les composants de l'installation (20 à 28) étant ceux qui transportent un flux de masse, et ces composants de l'installation (20 à 28) passant en mode d'économie d'énergie grâce au fait qu'ils réduisent les débits.

5. Procédé selon l'une des revendications précédentes,
la puissance de plusieurs composants de l'installation (20 à 28) étant automatiquement réduite ou augmentée par une seule instruction de commande.

6. Procédé selon l'une des revendications précédentes,
la puissance des composants de l'installation (20 à 28) qui sont en mode d'économie d'énergie étant automatiquement augmentée après l'interruption du laminage.

7. Dispositif de commande et/ou de régulation (4) pour une installation de laminage (2), comprenant un code de programme (40) lisible par machine, lequel comporte des instructions de commande (42) qui, lorsqu'elles sont exécutées, ordonnent au dispositif de commande et/ou de régulation (4) la mise en oeuvre du procédé selon l'une des revendications 1 à 6.

8. Code de programme (40) lisible par machine destiné à un dispositif de commande et/ou de régulation (4) pour une installation de laminage (2), le code de programme (40) comportant des instructions de commande (42) qui ordonnent au dispositif de commande et/ou de régulation (4) la mise en oeuvre du procédé selon l'une des revendications 1 à 6.

9. Support de mémoire (38) sur lequel est enregistré un code de programme (40) lisible par machine selon la revendication 8.

10. Installation de laminage (2) comprenant un dispositif de commande et/ou de régulation (4) selon la revendication 7.
